# FASCICULE DE BREVET EUROPEEN

(11) **EP 1 214 238 B1**
(45) Date de publication et mention de la délivrance du brevet: **11.08.2004**
(21) Numéro de dépôt: 00936961.2
(22) Date de dépôt: 29.05.2000
(51) Int. Cl.: B62B 3/02

(54) **CHARIOT PLIABLE**
ZUSAMMENKLAPPBARER WAGEN
COLLAPSIBLE TROLLEY

(30) Priorité: 01.06.1999 FR 9906861
(43) Date de publication de la demande: 19.06.2002
(73) Titulaire: Delaby, Daniel Jean, 92130 Issy les Moulineaux (FR); Sageon, Claude, 92310 Sèvres (FR)
(72) Inventeur: Delaby, Daniel Jean, 92130 Issy les Moulineaux (FR); Sageon, Claude, 92310 Sèvres (FR)
(74) Mandataire: Lepercque, Jean
(86) Numéro de dépôt international: PCT/FR2000/001459
(87) Numéro de publication internationale: WO 2000/073122

(56) Documents cités:
- US-A- 4 274 644
- US-A- 5 299 816

## Description

L'invention concerne un chariot du type pliable.

Dans le cadre de l'invention, le terme "chariot" doit être entendu dans son sens le plus général. Il s'agit de tous dispositifs comprenant une plate-forme ou plateau inférieur, munie habituellement de deux paires de roues de faible diamètre Habituellement également, les roues d'une des paires, généralement les roues à l'extrémité du plateau que l'on appellera arbitrairement "avant", sont dites "folles", car elles peuvent tourner librement autour d'un axe orthogonal au plan formé par le plateau inférieur. Cette disposition permet une conduite plus facile du chariot, car elle l'autorise à tourner pour éviter des obstacles ou suivre un chemin sinueux. Le chariot est enfin muni d'un organe du type poignée, dit "dossier" en termes de métier, en forme de "U" renversé, dont les extrémités des branches sont couplées mécaniquement sur les deux côtés de l'autre extrémité du plateau, ou extrémité arrière.

Le dossier peut prendre deux positions extrêmes : une position dite "de travail", dans laquelle il est sensiblement orthogonal au plan du plateau ou légèrement incliné vers l'arrière, par rapport à un axe orthogonal à ce plateau, et une position dite "de repos", dans laquelle il est replié sur le plateau et sensiblement parallèle à celui-ci. On prévoit des moyens de verrouillage réversible permettant de bloquer le dossier, au moins pour la position de travail. Grâce à cette disposition, un opérateur peut pousser ou tirer le chariot à la main, grâce à la partie horizontale du "U" renversé formant la poignée proprement dite.

Pour un usage professionnel, par exemple dans des bureaux ou ateliers, ce type de chariot est couramment utilisé pour transporter des pièces ou objets relativement lourds et encombrants : pièces de tissus, pièces métalliques, rames de papier, etc. Ces chariots ont également un usage domestique pour le transport de cartons, valises, etc.

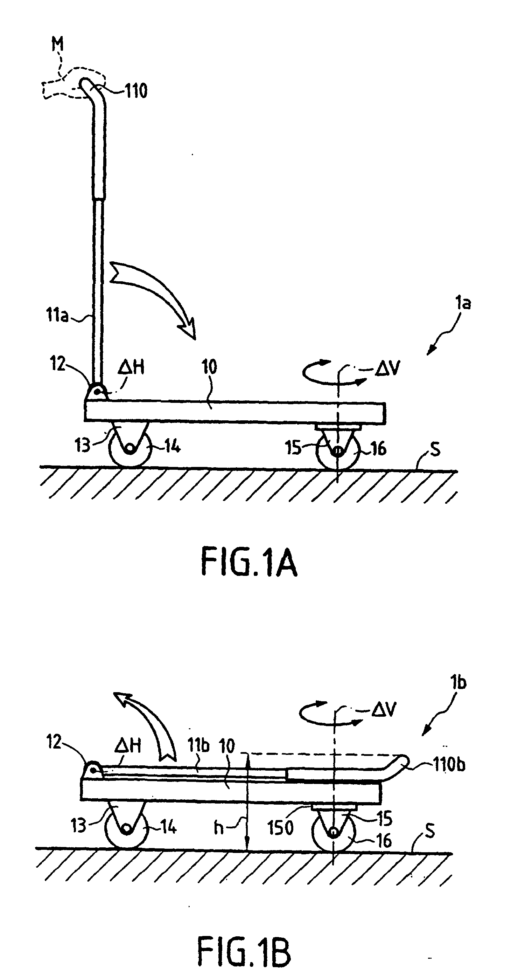

Les figures 1A et 1B, placées en fin de la présente description, illustrent schématiquement un exemple de chariot selon l'art connu, en positions de travail sous la référence 1a et de repos sous la référence 1B. Un tel chariot comprend essentiellement un plateau inférieur 10, ou socle de chargement, peu élevé par rapport au sol *S*. Le plateau 10 repose sur deux paires de roues, disposées sensiblement au quatre coins du plateau 10 : une paire de roues fixes à l'arrière, dont une seule, 14, est visible sur les figures 1A et 1B, et une paire de roues pivotantes à l'avant, mobiles en rotation autour d'un axe Δ_{V} orthogonal au plateau 10, dont une seule, 15 est visible. Les roues, 14 ou 15 respectivement, sont disposées à l'intérieur de supports, 13 et 15 respectivement, en forme de "U". Les supports arrières, par exemple 13, sont fixes et assujettis au plateau 10. Les supports avants, par exemple 15, sont mobiles autour d'un axe Δ_{V} orthogonal au plateau 10, c'est-à-dire vertical en position de travail du chariot 1a. Pour ce faire, on prévoit un axe de rotation ou une assise à roulement à billes, par exemple 150 pour le support 15.

En position de travail, le dossier est relevé : référence 11a, c'est-à-dire parallèle à l'axe Δ_{V}, ou légèrement incliné vers l'arrière, par rapport à cet axe. Un opérateur peut donc pousser ou tirer le chariot 1a à la main *M*, en s'aidant de la zone horizontale 110a, formant la poignée proprement dite. On prévoit des organes de verrouillage réversible et de rotation, sous la référence unique 12, qu'il est inutile de détailler plus avant.

En position de repos, le dossier est rabattu sur le dessus du plateau 10 : référence 11b. Le dossier 11b peut également être verrouillé temporairement dans cette position, à l'aide de l'organe 12.

Cette disposition permet de réduire le volume occupé par le chariot en position de repos, référencé 1b, c'est-à-dire lorsqu'il est inutilisé. Cependant, on constate aisément que la hauteur résiduelle *h* du chariot 1b reste importante : elle égale une hauteur cumulée représentant la hauteur des roues (diamètre) et de leurs supports, l'épaisseur du plateau 10 et la hauteur résiduelle du dossier (et de sa courbure éventuelle dans la zone de poignée 110b) ou la hauteur de l'organe 12 (selon l'importance relative de ces deux hauteurs)

Pour fixer les idées, avec de roues de diamètre typique égal à 125 mm, la hauteur (ou épaisseur) résiduelle du chariot 1b, en position de repos, est typiquement de 230 mm.

Il est donc relativement difficile de ranger et de stocker un tel chariot. De même, il est difficile de le ranger dans un coffre de voiture. En outre, on doit bien comprendre, qu'en position horizontale, les roues n'étant pas bloquées, la fonction "roulement" n'est pas supprimée, et le chariot est susceptible de mouvements incontrôlés, s'il n'est pas calé. D'autre part, le dessus du chariot n'est pas plan, puisque le dossier est rabattu sur celui-ci. On ne peut pas utiliser cette surface comme plan de chargement (lorsque le chariot est par exemple rangé dans le coffre d'une voiture), ni à fortiori le dessous du plateau, même en position retournée, puisque les roues sont proéminentes. De toutes façons, le dessus du plateau, comme il vient d'être rappelé, ne présente pas une assise horizontale.

Le document US-A-4274644 montre un chariot pliable.

On connaît également, d'après la demande de certificat d'utilité français, publiée sous le numéro 2 766 447, intitulée "Chariot extensible et pliable", un chariot qui, comme le titre l'indique, est non seulement pliable, comme le chariot qui vient d'être décrit, mais de surplus extensible. Cette disposition permet de réduire la longueur du chariot, lorsqu'il est inutilisé, mais ne résout en aucune façon le problème posé ci-dessus. Plié et rétracté, la hauteur résiduelle d'un tel chariot est sensiblement la même que celle du chariot des figures 1A et 1B, à paramètres comparables (hauteur des roues identique, etc.). En position de repos, il présente également les autres inconvénients rappelés.

L'invention se fixe pour but principal de fournir un chariot qui tout en conservant la structure générale des dispositifs de l'art connu et leurs avantages et leur utilité, ne présente pas les inconvénients de ces dispositifs, dont certains ont été rappelés.

Pour ce faire, selon une première caractéristique importante de l'invention, les roues du chariot sont escamotables. Plus précisément, elles sont rabattues contre la paroi inférieure, lorsque le chariot est en position de repos, c'est-à-dire non utilisé.

Selon une autre caractéristique importante de l'invention, les mouvements de repliement et de dépliement des roues sont synchrones avec ceux du dossier, et plus précisément sont provoqués par ces derniers. En d'autres termes, le repliement des roues (position rabattue) est provoqué par le repliement du dossier vers le plateau, pour atteindre la position de repos. De même, le dépliement des roues, pour atteindre la position normale de roulage, est obtenu tout aussi simplement en déployant le dossier.

On prévoit des moyens de verrouillage/déverrouillage, non seulement du dossier, mais aussi des roues en positions repliée ou dépliée. Ces moyens comprennent notamment une structure triangulaire de longerons, sous-jacente au plateau et actionnée par des tubes ou longerons latéraux du dossier. Cette structure est munie d'un organe actionnable à la main permettant obtenir le déverrouillage, organe disposé près de l'extrémité avant du plateau.

Dans un mode de réalisation préféré, le dossier est encastré, latéralement, dans l'épaisseur du plateau, lorsque le chariot est en position de repos. Seule dépasse vers l'avant la partie horizontale du dossier ou poignée. Cette partie constitue un organe de préhension permettant de transporter aisément à la main le chariot, en position de repos, c'est-à-dire replié.

Dans un mode de réalisation préféré encore, le chariot comportant avantageusement des roues avants mobiles en rotation autour d'un axe, on prévoit des organes de plaquage automatique de ces roues mobiles contre la paroi inférieure du plateau, lorsque les roues passent de la position dépliée (état opérationnel ou de travail) à la position repliée (ou de repos).

Dans une variante de réalisation, il est possible d'adapter des accessoires amovibles sur le plateau et/ou le dossier : casier, etc.

Ces dispositions présentent de nombreux avantages et notamment les suivants :

Le repliement complet du dossier et des roues permet de réduire considérablement le volume chariot, lorsqu'il n'est pas utilisé (position de repos), et plus particulièrement sa hauteur résiduelle. En reprenant les paramètres précédemment énoncés (même diamètre de roue, etc.), on obtient une hauteur résiduelle comprise typiquement dans la gamme 75 à 80 mm, hauteur que l'on comparera à celle d'un chariot de l'art connu équivalent, soit 230 mm.

L'encastrement de la structure du dossier dans le volume du plateau, outre le fait qu'il contribue à diminuer la hauteur résiduelle précitée, permet de surplus d'obtenir une paroi supérieure sensiblement plane. Cette disposition, et le fait que l'assise devienne sensiblement plane du fait du repliement des roues plaquées contre la paroi inférieure du plateau, sont de nature à permettre un rangement aisé du chariot, vertical dans un placard ou similaire, mais aussi à plat (par exemple dans le coffre d'une voiture). Stockés horizontalement, les chariots sont gerbables, ou autorisent la pose d'objets sur la paroi supérieure du plateau, puisqu'elle est sensiblement plane et horizontale.

Les opérations de dépliement, repliement, de verrouillage et de déverrouillage du dossier et des roues s'effectuent de façon aisée. Elles sont quasiment automatiques puisqu'une seule manoeuvre synchronise les mouvements des roues et du dossier.

La réalisation d'un chariot conforme aux enseignements de l'invention ne fait appel qu'à des technologies bien connues pour ce type d'applications et n'entraîne pas un surcoût notable, ni une augmentation de la complexité de fabrication et/ou des opérations de montage.

L'invention a donc pour objet principal un chariot pliable comprenant une structure de plateau pour le transport d'objets, et un dossier repliable, disposé à une extrémité dite avant du chariot, comportant une première position, dite de travail, dans laquelle il est déployé suivant une direction sensiblement orthogonale à ladite structure de plateau, et une position repliée, dite de repos, pour laquelle il est rabattu vers ladite structure de plateau, cette structure reposant sur au moins deux paires de supports de roues et des roues associées, dont une première paire disposée dans une zone proche de ladite extrémité avant, caractérisé en ce que ladite structure de plateau comprend un cadre constitué par une paire de premiers montants latéraux et de deux montants dits avant et arrière, et une plate-forme centrale de forme sensiblement rectangulaire, laissant un espace libre entre ses flancs latéraux et lesdits montants latéraux, en ce que ledit dossier comprend deux montants latéraux dont les zones d'extrémités inférieures sont disposées entre lesdits premiers montants latéraux et ladite plate-forme centrale, dans ledit espace libre, et sont couplées mécaniquement à ces premiers montants latéraux et/ou à ladite plate-forme centrale par des axes de rotation, en ce que lesdits supports de roues sont couplés mécaniquement à une paire de seconds montants latéraux, disposés sous lesdits premiers montants latéraux et mobiles en rotation autour d'axes couplés aux dits montants avant et arrière du cadre, respectivement, en ce que les extrémités inférieures desdits montants latéraux de dossier comportent des moyens de commande destinés à actionner des moyens de levier disposés sur les extrémités dites avants desdits seconds montants latéraux, de manière à provoquer leur rotation autour desdits axes de rotation lorsque ledit dossier est poussé vers l'avant du chariot pour passer de ladite position de travail à ladite position de repos, et à provoquer simultanément le repliement desdites roues contre la face dite inférieure de ladite plate-forme centrale, et en ce que, lesdits premiers supports de roues comprenant au moins une paroi plane tournée vers l'intérieur du chariot et lesdits seconds montants latéraux étant de section carrée ou rectangulaire, les zones d'extrémité inférieures desdits montants latéraux dudit dossier se prolongent vers le bas, de manière à s'appuyer contre lesdites parois planes des premiers supports de roues et contre les parois desdits montants latéraux tournées vers l'intérieur du chariot, lorsque ledit dossier passe de ladite position de repos à ladite positron de travail, et à faire pivoter lesdits seconds montants latéraux autour de leurs dits axes de rotation pour déployer lesdits supports de roues et les roues qui leur sont associées et à les maintenir fermement dans une position dépliée.

L'invention va maintenant être décrite de façon plus détaillée en se référant aux dessins annexés, parmi lesquels :
- les figures 1A et 1B illustrent schématiquement un exemple de chariot selon l'art connu ;
- les figures 2A et 2B illustrent schématiquement un exemple de réalisation de chariot selon un mode préféré de l'invention, en position de travail, en vue de perspective de dessus et de dessous, respectivement ;
- les figures 2C et 2D illustrent schématiquement un exemple de réalisation de chariot selon un mode préféré de l'invention, en position de repos, en vue de perspective de dessus, et en vue de dessous, respectivement ;
- les figures 3A à 3E sont des vues de détails illustrant le repliement et le déploiement des roues, du chariot des figures 2A à 2D ;
- les figures 4A et 4B sont des vues de détail illustrant le verrouillage et le déverrouillage dans la zone avant des longerons latéraux supports des roues ;
- la figure 5 est une vue de détail illustrant le verrouillage et le déverrouillage du dossier du chariot ;
- la figure 6 est un système à cliquet utilisé pour bloquer de façon réversible le dossier en position de repos ; et
- la figure 7 est un exemple de réalisation supplémentaire d'un chariot selon l'invention, incorporant un accessoire de transport sur le dossier.

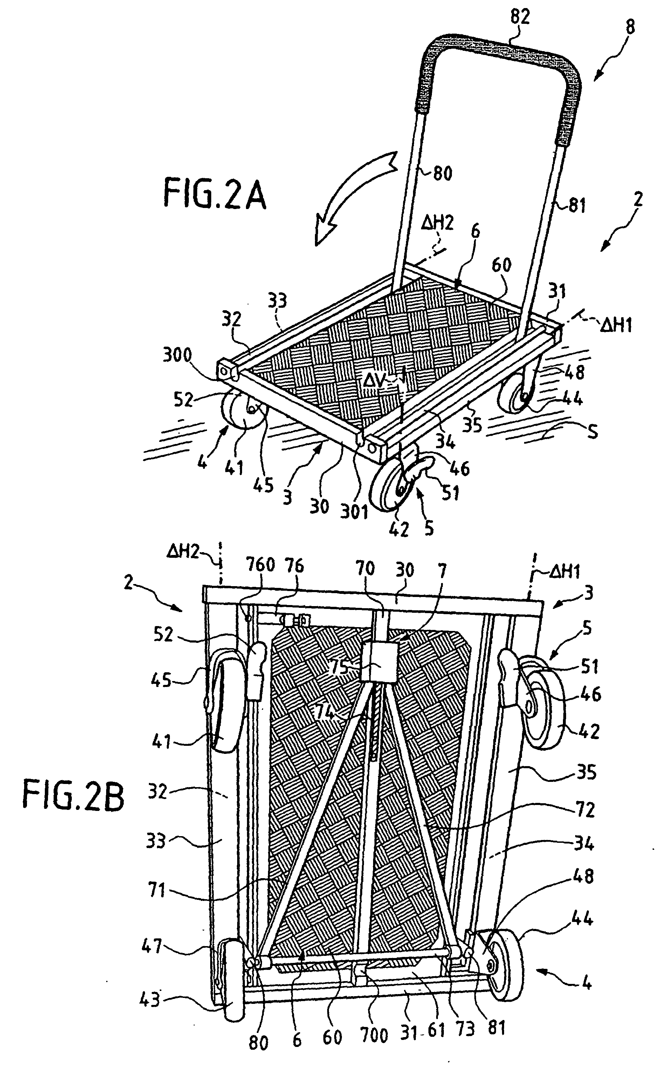

On va maintenant décrire de façon détaillée un exemple de chariot selon un mode préféré de l'invention par référence aux figures 2A à 2D. Les éléments communs à ces figures portent les mêmes références et ne seront redécrits qu'en tant que de besoin.

La figure 2A illustre le chariot, référencé désormais 2, en vue de dessus et en perspective. De façon analogue aux chariots de l'art connu, il comprend une plate-forme de chargement ou plateau, sous les références 3 et 6, monté sur deux paires de roues : une paire de roue fixes, 41 et 42, à l'arrière du plateau 3-6, et une paire de roues avants, 43 et 44, mobiles en rotation autour d'un axe Δ_{V}, orthogonal au plan du plateau, c'est-à-dire vertical si le chariot 2 est posé sur un sol S horizontal. Dans l'exemple décrit, le plateau est constitué d'un cadre rigide 3 formé d'une paire de longerons, avant 30 et arrière 31, de section rectangulaire ou carrée, réunis par deux tubes latéraux, 32 et 34, de section circulaire, et d'un plateau support central proprement dit 6. Ce dernier, comprend une paroi plane 60, renforcée en périphérie (figure 2B : référence 61) et assujettie, à l'avant et à l'arrière du plateau, aux longerons 30 et 31, respectivement.

Les roues 41 à 44, sont insérées dans des supports, respectivement 45 à 48, classiquement on forme de "U" comme dans l'art connu. Par contre, les supports ne sont pas directement fixés ou couplés mécaniquement au plateau. Ils sont fixés ou couplés mécaniquement par l'intermédiaire de deux poutres ou longerons latéraux, 33 et 35, de section rectangulaire ou carrée. Les supports arrières, 47 et 48, sont fixés rigidement à ces longerons. Les supports avants, 45 et 46, sont couplés mécaniquement à l'aide d'organes (non représentés sur les figures 2A à 2C), de type similaire à ceux de l'art connu, autorisant la rotation précitée autour de l'axe Δ_{V}.

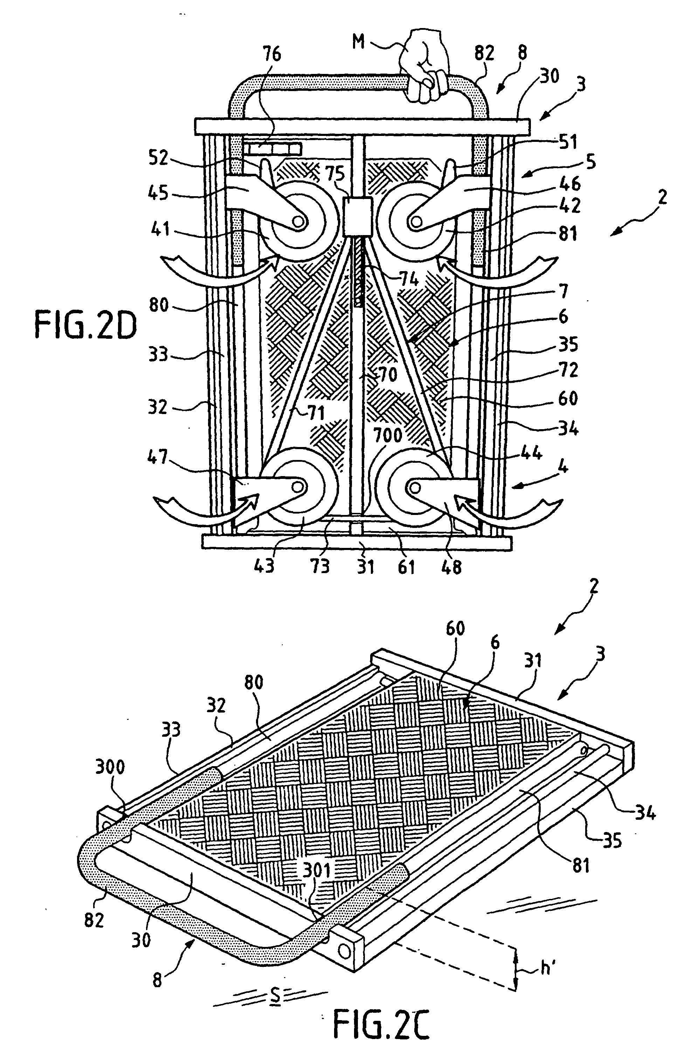

Les longerons latéraux, 33 et 35, sont à leur tour couplés mécaniquement, à leurs deux extrémités, aux longerons avant et arrière, 30 et 31, par l'intermédiaire d'axes de rotation qui seront décrits de façon plus détaillée ci-après. Cette disposition permet une rotation des longerons latéraux,. 33 et 35, et donc des supports, 45 à 48, ainsi qu'en définitif des roues, 41 à 44, autour de deux axes, Δ_{H1} et Δ_{H2}, sensiblement parallèles au plan du plateau (paroi 60), comme il le sera décrit en regard de la figure 2C.

Le chariot 2 comprend, de façon également similaire à l'art connu, un dossier repliable 8. CeLui-ci a la forme générale d'un "U" renversé comprenant une partie horizontale 82, formant poignée. Lorsque le chariot 2 est opérationnel (position de travail), le dossier 8 est relevé et sensiblement parallèle a l'axe Δ_{V} (branches 80 et 81), c'est-à-dire *a priori* vertical, ou est légèrement penché vers l'arrière par rapport à cet axe.

La figure 2B représente le chariot 2 en perspective, en vue de dessous, toujours à l'état opérationnel (roues, 41 à 44, et dossier 8 déployés). On a représenté sur cette figure 2B une structure mécanique 7, en triangle, qui permet de verrouiller les roues et leurs supports dans la position de travail, et de les déverrouiller lorsque l'on désire obtenir la position de repos. Cette structure mécanique 7 sera décrire de façon plus détaillée ci-après.

Les figures 2C et 2D représentent le chariot 2 en position de repos, c'est-à-dire non seulement le dossier 8 replié, mais, conformément à l'une des caractéristiques importantes de l'invention, également les ensembles 4, roues et supports. La figure 2C représente le chariot 2 en perspective, en vue de dessus (le chariot 2 étant posé horizontalement sur le sol *S*), et la figure 2D le chariot 2 en vue de dessous (le chariot 2 étant suspendu verticalement, par exemple porté par la main *M* d'un opérateur non représenté).

En outre, selon une autre caractéristique importante de l'invention, en position repliée, les branches, 80 et 81, du dossier 8, sont encastrées dans l'épaisseur du plateau 3-6, dans l'enceinte laissée libre entre la paroi plane 60 et les tubes latéraux, 32 et 34. Seule la zone supérieure proche de la poignée 82 dépasse du plateau. Pour ce faire, on a prévu sur le montant avant 30 des encoches, 300 et 301, de section adaptée à la section des tubes 80 et 81.

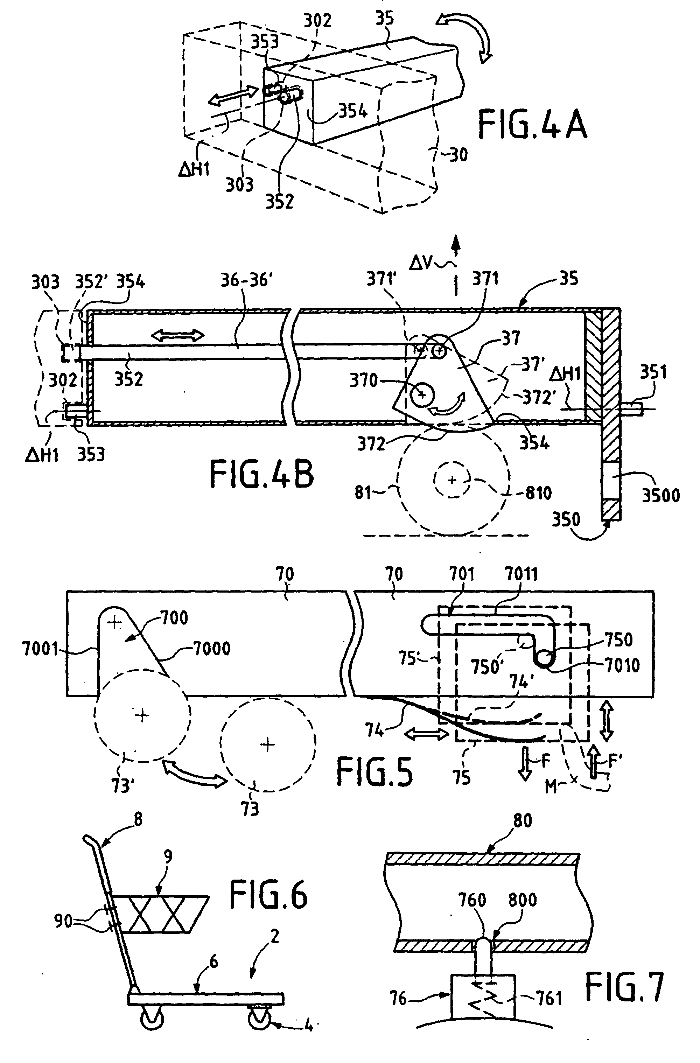

De façon avantageuse, on prévoit également un organe 76, de verrouillage et de déverrouillage de ces tubes dans le plateau. Cet organe 76 peut comprendre un cliquet à ressort 760 (figure 2B) qui s'enfonce dans un orifice (non représenté sur les figures 2B ou 2D) réalisé dans le tube 80 (dans l'exemple décrit) et qui sera détaillé ci-après en regard de la figure 6.

Une fois le dossier 8 et les roues 4 repliés, le chariot est désormais en position non opérationnelle ou de repos. On constate aisément, comme illustré plus particulièrement par la figure 2C, que l'épaisseur résiduelle *h'* du chariot 2 est extrêmement faible. Elle se réduit sensiblement à l'épaisseur du seul plateau 3-6, c'est-à-dire, de façon pratique, sensiblement à la hauteur des montants avant et arrière, 30 et 31. Dans la position représentée sur la figure 2C, c'est-à-dire à plat sur le sol S (ou sur le plancher d'un coffre de voiture par exemple), on constate également que la surface supérieure est sensiblement plane et horizontale. On peut donc y déposer des objets.

En outre, la manipulation du chariot 2 est très aisée. On se sert de la poignée 82, dépassant du plateau et dans le prolongement de celui-ci, en tant qu'organe de préhension et de transport, comme illustrée plus particulièrement par la figure 2D.

Pour que les roues "libres", c'est-à-dire les roues avants pivotantes, 41 et 42, et leurs supports, 45 et 46, ne gênent pas la manoeuvre de repli, en adoptant une position spatiale empêchant ce repli, on prévoit de façon avantageuse un organe que l'on appellera ci-après "plaqueur". Ces organes sont constitués de protubérances, ou leviers, référencés 51 et 52, sur les figures 2B et 2C. Ils sont attachés aux supports, 45 et 46, et les dépassent extérieurement. Par effet de levier, ils font tourner ceux-ci pour que les roues, 41 et 42, puissent se plaquer sur la face inférieure de la paroi 60, lorsqu'on fait passer le chariot 2 de la position de travail (figures 2A et 2B) à la position de repos (figures 2C et 2D). Ensuite, ils maintiennent fermement ces roues, 41 et 42, dans la position atteinte

On va maintenant décrire de façon détaillée le mécanisme permettant les manoeuvres de repli et de déploiement simultanés du dossier 8 et des roues 4, par référence plus particulière aux figures de détail 3A à 3E. Les éléments communs aux figures précédentes portent les mêmes références et ne seront redécrits qu'en tant que de besoin.

Selon une première caractéristique importante, chacun des longerons latéraux auxquels sont attachés les supports de roue est muni, sur son extrémité arrière (proche de l'extrémité inférieure des montants latéraux, 80 et 81, du dossier 8) d'une pièce débordante comportant une encoche.

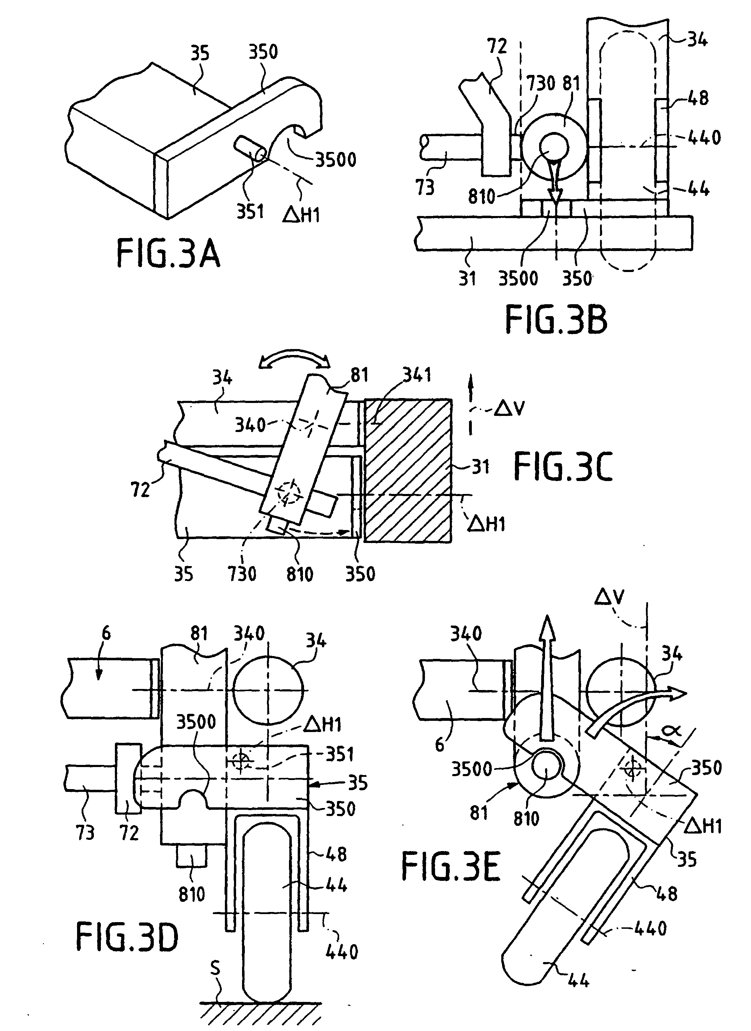

Cette caractéristique est illustrée, en ce qui concerne le longeron 35, plus particulièrement par la figure 3A, en perspective et en vue de dessus. Il doit être entendu que les deux longerons, 33 et 35, sont de structure identique. La pièce d'extrémité, 350, forme une aile prolongeant la face d'extrémité du longeron vers l'intérieur du chariot, comme le montre plus particulièrement la figure 3D, en vue de face.

Selon une autre caractéristique, les montants latéraux, par exemple le montant 81, seul représenté sur les figures 3A à 3E, comprend un téton 810 d'extrémité (voir figure 3D) destiné à s'insérer dans l'encoche 3500 dont est munie la pièce 350. Cette dernière est tournée vers le bas.

Selon une autre caractéristique encore, les longerons latéraux, par exemple le longeron 35, comporte des axes de rotation aux deux extrémités, les couplant mécaniquement au longerons d'extrémité, respectivement 30 et 31. Sur la figure 3A on a représenté un des axes, 351, prolongeant la pièce 350 et destiné à s'insérer dans un orifice (non représenté) prévu dans le montant arrière 31. Cette disposition permet au longeron 35 de tourner autour de l'axe Δ_{H1}, et d'entraîner ainsi les roues et leurs supports pour qu'elles puissent se replier ou se déployer, comme il le sera montré plus particulièrement en regard des figures 3D et 3E. il en est de même pour le longeron 33, autour de l'axe Δ_{H2}.

Les montants du dossier 8, par exemple le montant 81, sont couplés mécaniquement aux tubes latéraux, 32 ou 34 (34 pour le montant 81), et/ou au plateau support central 6, par l'intermédiaire d'axes de rotation disposés horizontalement, par exemple l'axe 340 (voir figure 3C).

On va maintenant se reporter de nouveau aux figures 2B ou 2D. Sur ces figures, on a représenté la structure de verrouillage et de déverrouillage 7, de forme générale triangulaire.

Cette structure triangulaire 7 comprend une poutre centrale 70 parallèle à la longueur du chariot 2 et solidaire, par ses deux extrémités, des longerons arrière 31 et avant 30 Les extrémités inférieures des montants 80 et 81 sont couplées mécaniquement à un longeron tubulaire 73, formant la base du triangle précité et donc orthogonal à la poutre centrale 70. Ce couplage mécanique s'effectue par l'intermédiaire d'axes de rotation disposés horizontalement, par exemple l'axe 730 pour le montant 81, comme illustré plus particulièrement par la figure de détail 3C, en vue de côté. Les deux côtés inclinés du triangle sont constitués de longerons, 71 et 72, se rejoignant dans un manchon 75, glissant le long de la poutre centrale 70, et dont la fonction sera précisée ci-après.

Les figures de détail 3B, en vue de dessous, et 3D, en vue de face, illustrent la position de travail du montant 81, de la roue arrière 44 et de son support 48, ainsi que du montant 35 auquel le support 48 est assujetti de façon fixe. On constate, d'une part, que le montant 81 est calé entre le tube 34 et la structure de plateau 6. D'autre part, le bas du montant 81 se prolonge vers le bas de manière à ce qu'il s'appuie sur la face interne du montant 35 et sur le flanc du support 48. Cette disposition oblige le montant 35 à tourner autour de l'axe Δ_{H1} et le maintient fermement dans cette position, c'est-à-dire la roue 44 et son support 48 parallèles à l'axe Δ_{V} (*a priori* vertical, lorsque le chariot 2 est posé sur le sol *S*). La roue 44 est retenue dans le support 48 en forme de "U" renversé de façon classique par un axe de rotation symbolisé par la référence 440.

Dans la position de travail, les montants, 80 et 81, du dossier 8 sont sensiblement parallèles à l'axe Δ_{V}, ou légèrement penchés vers l'arrière, comme illustré sur la figure 3C.

Lorsque l'on pousse le dossier 8 vers l'avant, pour le faire passer de la position opérationnelle (position de travail) à la position de repos, les montants, par exemple le montant 81, vont tourner (en leur extrémité inférieure) autour des axes de rotation, par exemple l'axe 340. En fin de course, les tétons d'extrémité, par exemple le téton 810 pour le montant 81, vont s'engrener dans les encoches des pièces d'extrémité des longerons latéraux, par exemple le téton 810 dans l'encoche 3500. Il s'ensuit que, comme plus particulièrement illustré par la figure 3E, le longeron 35 va être entraîné en rotation autour de l'axe horizontal Δ_{H1}. Il en est de même pour le longeron 33, autour de l'axe axe Δ_{H2}, ce qui permet d'escamoter les roues. Sur la figure 3E, on a représenté le longeron 35 en cours de basculement. Il entraîne le support 48 et la roue 44, qui se trouve dans un plan formant un angle α (différent de 90 degrés) avec l'axe Δ_{V}. Ceci est également vrai pour les roues pivotantes avants, 41 et 42.

En fin de course (voir figure 2D), les roues sont plaquées contre la face inférieure de la structure de plateau 6. Le repliement des roues pivotantes avants, 41 et 42, est facilité par les plaqueurs, 51 et 52, comme il a été décrit.

On constate, à la description des figures 3A à 3E, que le simple fait de basculer vers l'avant le dossier 8, pour passer de la position de travail à la position de repos, entraîne également, et automatiquement, le repliement des roues contre la face inférieure du plateau 6, selon la caractéristique principale de l'invention.

On va maintenant décrire des dispositions complémentaires permettant le verrouillage et le déverrouillage de composants du chariot 2, dans les positions de travail et de repos, respectivement, et permettant de passer de l'une à l'autre.

En position de travail, à l'extrémité arrière du chariot 2, comme il l'a été montré plus particulièrement en regard de la figure 3D, les montants latéraux supports des roues, par exemple le support 35, sont maintenus fermement verticaux En effet, les montants latéraux du dossier 8, par exemple le montant 81, sont emprisonnés entre le plateau 6 et les tubes latéraux, par exemple le tube 34 Un écart fixe entre les extrémités inférieures des montants latéraux, 80 et 81, est imposé par le longeron 73. Les montants verticaux, 80 et 81, se prolongent vers le bas et s'appuient contre les parois internes des supports de roues, que l'on suppose planes, par exemple contre la paroi du support 48 pour le montant vertical 81 Il s'ensuit que, le support 48 étant assujetti de façon fixe au montant 35, le support 48 et la roue associée 44, sont fermement maintenus, à cette extrémité du chariot 2. Il en est de même naturellement de l'ensemble montant 33, support de roue 47 et roue 43.

Cependant, à l'extrémité avant du chariot 2, cette disposition avantageuse ne peut être adoptée. D'une part, il n'existe pas de montants de dossier, d'autre part, les roues avants sont pivotantes autour de l'axe Δ_{V} (voir figure 2A). Si aucune autre disposition n'était adoptée, les montants seraient sujets à des torsions autour de l'axe de rotation avant de ces montants.

Aussi, on prévoit un système de verrouillage avant des montants latéraux débrayable, 33 et 35. Ce système va maintenant être décrit par référence aux figures 4A et 4B. Ce système est également commandé par les extrémités inférieures des montants, 80 et 81 du dossier 8. Les éléments communs aux figures précédentes portent les mêmes références et ne seront redécrits qu'en tant que de besoin.

La figure 4B est une vue de dessous, en coupe de l'un des montants latéraux supports de roue, en l'occurrence le montant latéral 35.

Selon une caractéristique importante, on prévoit une came 37, d'axe de rotation 370, parallèle à l'axe Δ_{V}. La came 37 est dotée avantageusement d'une forme triangulaire, dont la base 372 est arrondie. On prévoit également une fente 354 dans la paroi verticale interne du montant 35. La came 37 est disposée dans la région de manoeuvre du montant 81, de manière à ce que, lorsque le dossier 8 est en position de travail, le montant 81 appuie sur la base arrondie de la came et la repousse vers l'intérieur du montant 35 (références 37' et 372'), par rotation autour de l'axe 370. Par contre, lorsque le dossier 8 est en position de repos, la came est relâchée et sa base arrondie sort de la fente et dépasse vers l'extérieur (références 37 et 372). On prévoit des moyens élastiques (non représentés), tel un ressort exerçant une force de rappel sur la came 37 pour qu'elle se positionne automatiquement dans la position sortie, en l'absence d'autres contraintes (plus poussée du montant 81).

Selon une autre caractéristique, la came 37 entraîne une tringle longitudinale 36, qui s'étend d'un axe de rotation, 371, disposé dans une région proche du sommet du triangle de la came 37, à l'extrémité avant 352 du montant 35. En position de repos, la came 37 est sortie du montant 35 et la tringle 36 est tirée vers l'arrière. On s'arrange pour que la longueur de la tringle 36 soit telle que, dans cette position elle affleure en face avant du montant 35.

A titre d'alternative, les moyens élastiques précités peuvent être constitués par un ressort classique, coaxial à la tige 36, disposé près de la paroi 352 et repoussant la tige 36 vers la came 37. En position de repos, le ressort pousse la tige 36 vers l'intérieur du montant 35 et exerce une poussée sur la came 37, via la tige 36 La came 37 tourne autour de l'axe 370 et la base arrondie 372 dépasse vers l'extérieur, comme précédemment.

La figure 4A est une figure de détail, en perspective, de la face avant du montant 35 (en trait plein). On a également représenté le montant avant 30 du chariot 2 (en traits pointillés). Le montant 35 est enfiché dans ce montant 30, par l'intermédiaire d'un axe de rotation 353, dans un orifice 302 prévu à cet effet. On retrouve cette disposition à l'arrière (axe de rotation 351), pour le couplage mécanique entre le montant 35 et le montant 31. De ce fait, le montant 35 peut tourner autour de l'axe de symétrie Δ_{H1}, comme il l'a été montré précédemment (voir figures 3E par exemple).

En sus de l'orifice 302 destiné à recevoir l'axe de rotation 353, on prévoit un second orifice dans la paroi interne du montant avant 303 destiné à recevoir l'extrémité de la tige 36. Comme il vient d'être montré, en position de repos, l'extrémité de la tige 36 affleure sur la paroi d'extrémité 354 du montant 35 Par contre, lorsque la came est repoussée vers l'intérieur du montant 35 (référence 37'), dans son mouvement de rotation autour de l'axe 370, elle repousse également la tige vers l'avant (références 371' et 36'). L'extrémité de celle-ci (référence 352') ressort de la paroi 354 et s'insère dans l'orifice 303. Le montant 35 ne peut donc plus tourner librement autour de l'axe de symétrie Δ_{H1}., puisqu'il existe deux points d'ancrage. Le déverrouillage s'effectue, de nouveau de façon automatique, lorsque le dossier 8 est poussé vers l'avant (passage de la position de travail à la position de repos), la tige 36 se rétractant.

Selon une autre caractéristique de l'invention, lorsque le dossier 8 passe de la position de repos (encastrée dans la structure de plateau 6) à la position de travail, on prévoit un système de verrouillage automatique, mais débrayable à la main.

Pour expliciter ce système de verrouillage, on va se reporter de nouveau aux figures 2B, 2D et 3C. On considérera également la figure de détail 5, représentant la poutre centrale en vue de côté. Sur cette dernière figure, les éléments communs aux figures précédentes portent les mêmes références et ne seront redécrits qu'en tant que de besoin.

Le système de verrouillage/déverrouillage 7 est constitué essentiellement d'une structure triangulaire. La base du triangle comprend un longeron tubulaire 73 entraîné par les extrémités inférieures des montants, 80 et 81, du dossier 8. Les deux côtés du triangle sont constitués de longerons, 71 et 72, couplés mécaniquement à un manchon 75, disposé à l'avant du chariot 2 et formant le sommet du triangle. Ce dernier glisse le long de la poutre centrale 70

Comme le montre la figure de détail 5, dans la zone couverte par le manchon 75 (représenté en traits pointillés), la poutre 70 comporte une ouverture 701, sur ses deux parois latérales, en forme de "L" renversé à 90°, tourné vers l'arrière de la poutre 70 (vers la gauche sur la figure 5).

Le manchon 75 comporte une tige 750, disposée perpendiculairement à la longueur de la poutre 70, introduite dans l'ouverture 701. On prévoit également un ressort de type lame 74, ou tout autre moyen élastique, attaché à une extrémité à la paroi inférieure de la poutre 70. L'extrémité libre de ce dernier est insérée dans le manchon 75, de manière à exercer une force de répulsion *F*, tendant à l'éloigner de la paroi inférieure de la poutre 70.

On s'arrange également pour que la tige 750 soit en regard de l'encoche que forme la branche verticale 7010 du "L" renversé, lorsque le dossier 8 est en position de travail. Dans cette position, le longeron tubulaire 73 est repoussé vers l'avant et il entraîne le manchon 75 via les longerons 71 et 72. Sous l'effet de la force de répulsion *F* exercée par le ressort 74, le manchon 75 est repoussé vers le bas et la tige 750 s'engage dans l'encoche 7010. A l'arrière du chariot 2, le longeron 73 est en appui sur la paroi inférieur de la poutre 70.

Dans la position ainsi atteinte, le manchon 75 est donc verrouillé. Il en est de même pour toute la structure triangulaire de verrouillage/déverrouillage, et de ce fait pour le dossier 8. On peut donc exercer des forces importantes sur ce dernier (poignée 82), pour pousser ou le tirer le chariot 2.

Si l'on désire déverrouiller le dossier 8, pour le faire passer de la position de travail à la position de repos, il suffit pour un opérateur, d'appuyer sur la paroi inférieure du manchon avec sa main *M*, et d'exercer une force de poussée F' plus importante que la force *F* du ressort (références 74' et 75'). La tige 750 sort de son logement (référence 750'). Il suffit alors de pousser sur le dossier 8 (par exemple sur la poignée 82) pour le déverrouiller et le faire basculer vers l'avant La tige (référence 750') glisse alors dans la branche allongée 7011 du "L", entraînant le manchon (référence 75').

Cette opération entraîne automatiquement les autres actions, comme précédemment décrit : déverrouillage des montants latéraux et repliement des roues.

De façon avantageuse, on prévoit une saignée 700, dans une zone arrière de la poutre 70. La position exacte de cette saignée 700 est telle que lorsque le dossier 8 est rabattu (position de repos), le longeron, ici référencé 73', s'engage dans cette saignée 700. Avantageusement, la paroi arrière, 7001, de la saignée 700 est sensiblement verticale à un axe longitudinal de la poutre 70 et sa paroi avant, 7000, en pente douce, ce qui permet des engagement et désengagement aisés du longeron 73-73', lorsqu'il passe de la position travail à la position repos, et inversement.

Lorsque le dossier 8 est en position encastré dans la structure de plateau 3-6, on peut également prévoir un système de cliquet, 76, de maintien dans cette position, s'engageant sur au moins un des montants, par exemple le montant 80, comme illustré sur les figures 2B et 2D, ainsi que sur la figure de détail 6. Sur cette dernière figure, les éléments communs aux figures précédentes portent les mêmes références et ne seront redécrits qu'en tant que de besoin.

Le système à cliquet 76 est disposé avantageusement dans un coin de la structure de plateau 6, contre le montant avant 30. On prévoit un trou 800 dans le tube formant le montant latéral 80, dans lequel s'engage un téton , arrondi en extrémité, actionné par un ressort 761 disposé à l'intérieur du système à cliquet 76. Lorsque le montant 80 est rabattu, le téton 7601 s'encliquète dans le trou 800 et maintient le montant 80, et donc le dossier 8, encastré dans la structure de plateau 3-6. Pour déverrouiller le dossier 8, il suffit d'exercer une force suffisamment élevée pour vaincre la force du ressort 761. Du fait de la forme arrondie du téton 760, ce dernier se désengage du trou 800, et le dossier 8 peut être relevé.

Il est enfin possible de prévoir divers accessoires s'adaptant sur le chariot 2 selon l'invention, qui vient d'être décrit. A titre d'exemple non limitatif, comme illustré schématiquement par la figure 7, on peut prévoir, notamment pour des usages domestiques, un panier 9, s'encliquetant ou s'accrochant de façon réversible sur le dossier 9, par l'intermédiaire de tout organe classique adapté 90 : système à poignées de vissage, clips, etc. Lorsque le dossier 8 doit être rabattu, il suffit de retirer l'accessoire 9 précité.

Dans une variante non représentée, on pourrait prévoir également un accessoire, également du type panier ou équivalent, s'encliquetant sur la structure de plateau 3-6, lorsque le chariot 2 est à l'état opérationnel.

A la lecture de ce qui précède, on constate aisément que l'invention atteint bien les buts qu'elle s'est fixés.

Sans en répéter les nombreux avantages, elle permet notamment un gain de place important, à l'état de repos (plié). En outre la manipulation est aisé, les manoeuvres, pour l'essentiel, étant automatiquement déclenchées automatiquement par les mouvements de repli ou de déploiement du dossier. Seul le déverrouillage de ce dernier nécessite une intervention humaine spécifique, en agissant simplement sur un organe disposé à porté de main.

Il doit être clair cependant que l'invention n'est pas limitée aux seuls exemples de réalisations explicitement décrits, notamment en relation avec les figures 2A à 7.

En particulier, les valeurs numériques n'ont été précisées que pour fixer les idées. Elles dépendent essentiellement de l'application précise visée. De même, le nombre de paires de roues pourrait être plus grand que deux : par exemple, on pourrait prévoir une paire de roue intermédiaire pour un chariot de grande longueur. Il n'est pas non plus nécessaire que les roues avants soient pivotantes, par exemple si, dans l'application visée, le chariot se déplace sur un chemin sensiblement rectiligne.

## Revendications

1. Chariot pliable comprenant une structure de plateau pour le transport d'objets, et un dossier repliable, disposé à une extrémité dite avant du chariot, comportant une première position, dite de travail, dans laquelle il est déployé suivant une direction sensiblement orthogonale à ladite structure de plateau, et une position repliée, dite de repos, pour laquelle il est rabattu vers ladite structure de plateau, cette structure reposant sur au moins deux paires de supports de roues et des roues associées, dont une première paire disposée dans une zone proche de ladite extrémité avant, **caractérisé en ce que** ladite structure de plateau comprend un cadre (3) constitué par une paire de premiers montants latéraux (32, 34) et de deux montants dits avant (30) et arrière (31), et une plate-forme centrale (6) de forme sensiblement rectangulaire, laissant un espace libre entre ses flancs latéraux et lesdits montants latéraux (32, 34), **en ce que** ledit dossier (8) comprend deux montants latéraux (80, 81) dont les zones d'extrémités inférieures sont disposées entre lesdits premiers montants latéraux (32, 34) et ladite plate-forme centrale (6), dans ledit espace libre, et sont couplées mécaniquement à ces premiers montants latéraux (32, 34) et/ou à ladite plate-forme centrale (6) par des axes de rotation (340), **en ce que** lesdits supports de roues (45-48) sont couplés mécaniquement à une paire de seconds montants latéraux (33-35), disposés sous lesdits premiers montants latéraux (32, 34) et mobiles en rotation autour d'axes (351, 353) couplés aux dits montants avant (30) et arrière (31) du cadre (3), respectivement, **en ce que** les extrémités inférieures desdits montants latéraux (80, 81) de dossier (8) comportent des moyens de commande (810) destinés à actionner des moyens de levier (350) disposés sur les extrémités dites avants desdits seconds montants latéraux (33, 35), de manière à provoquer leur rotation autour desdits axes de rotation (351, 353) lorsque ledit dossier (8) est poussé vers l'avant du chariot (2) pour passer de ladite position de travail à ladite position de repos, et à provoquer simultanément le repliement desdites roues (41-44) contre la face dite inférieure de ladite plate-forme centrale (6), et **en ce que**, lesdits premiers supports de roues (45-48) comprenant au moins une paroi plane tournée vers l'intérieur du chariot (2) et lesdits seconds montants latéraux (33-35) étant de section carrée ou rectangulaire, les zones d'extrémité inférieures desdits montants latéraux (80, 81) dudit dossier (8) se prolongent vers le bas, de manière à s'appuyer contre lesdites parois planes des premiers supports de roues (45-48) et contre les parois desdits montants latéraux (33-35) tournées vers l'intérieur du chariot, lorsque ledit dossier (8) passe de ladite position de repos à ladite position de travail, et à faire pivoter lesdits seconds montants latéraux (33, 35) autour de leurs dits axes de rotation (351, 353) pour déployer lesdits supports de roues (45-48) et les roues (41-44) qui leur sont associées et à les maintenir fermement dans une position dépliée.

2. Chariot pliable selon la revendication 1, **caractérisé en ce que** lesdits moyens de commande sont constitués par des tétons (851) prolongeant les extrémités inférieures desdits montants latéraux (80, 81) de dossier (8) et les moyens formant levier sont constitués par une languette (350) fixée à l'extrémité dite arrière desdits seconds montants latéraux (33, 35), dépassant vers l'intérieur du chariot (2) et comportant une encoche (3500) de forme duale dudit téton (851), et dans laquelle celui-ci s'engrène.

3. Chariot pliable selon l'une des revendications 1 ou 2, **caractérisé en ce que** lesdits seconds montants latéraux (33, 35) comprennent un système à came interne (37), actionné chacun par une zone d'extrémité inférieure d'un desdits montants latéraux (80, 81) dudit dossier (8), **en ce que** lesdites cames (37) sont mobiles en rotation autour d'axes (370), **en ce que** lesdits seconds montants latéraux (33, 35) comportent des fentes (354), **en ce que** lesdites cames (37) comprennent une paroi arrondie (372) sortant partiellement par ladite fente (354) lorsque lesdits montants latéraux (80, 81) dudit dossier (8) sont dans ladite position de repos et repoussée vers l'intérieur lorsque lesdits montants latéraux (80, 81) dudit dossier (8) sont dans ladite position de travail, **en ce qu'**il est prévu, pour chacun desdits seconds montants latéraux (33, 35), une tringle longitudinale (36), dont une première extrémité est couplée par un axe de rotation (371) à l'une desdites cames (37), s'étendant jusqu'à ladite extrémité avant desdits seconds montants latéraux (33, 35), les secondes extrémités de ces tringles (36) affleurant en surface des faces d'extrémité avant (354) de ces seconds montants latéraux (33, 35), dans ladite position de repos, et dépassant de ces faces d'extrémité avant (354), dans ladite position de travail, de manière à s'enfoncer dans des trous (303) réalisés dans ledit montant avant (30), ces extrémités de tige (36') coopérant avec les axes de rotation avants (353) desdits seconds montants latéraux (33, 35) pour les verrouiller et empêcher leur rotation dans ladite position de travail.

4. Chariot pliable selon l'une quelconque des revendications précédentes, **caractérisé en ce que** les extrémités inférieures desdits montants latéraux (80, 81) dudit dossier (8) sont couplées mécaniquement par un longeron transversal (73) disposé sous ladite structure de plateau (6), **en ce qu'**il est prévu une poutre longitudinale centrale (70) assujettie à ses deux extrémités aux dits montants avant (30) et arrière (31), respectivement, **en ce que** les extrémités dudit longeron transversal (73) sont également couplées à des premières extrémités de deux longerons latéraux (71, 72), **en ce que** les secondes extrémités de ces longerons latéraux (71, 72) sont réunies par un manchon (75) glissant le long de ladite poutre longitudinale centrale (70), de manière à former une structure triangulaire, **en ce que** ladite poutre longitudinale centrale (70) comporte une ouverture (701) en forme de "L" renversé, dont la petite branche forme une première encoche (7010) et la grande branche une seconde encoche (7011), parallèle à une direction longitudinale, **en ce que** ledit manchon (75) comporte une tige (750) insérée dans ladite ouverture (701), **en ce qu'**il est prévu des moyens élastiques (74) exerçant une force de répulsion (F) tendant à écarter ledit manchon (75) de la paroi inférieure de ladite poutre longitudinale centrale (70), **en ce que**, lorsque lesdits montants latéraux (80, 81) dudit dossier (8) passent de ladite position de repos à ladite position de travail, ledit longeron transversal (73) est entraîné de telle sorte qu'il entraîne à son tour ledit manchon (75), par l'intermédiaire desdits longerons latéraux (71, 72), vers une position pour laquelle, ladite tige (750) étant en regard de ladite première encoche (7010) et le manchon (75) étant repoussé par lesdits moyens élastiques (74), ladite tige (750) pénètre dans la première encoche (7010), le manchon (75) reste bloqué dans cette position et ledit dossier (8) est verrouillé dans ladite position de travail, et **en ce que** le déverrouillage est obtenu en exerçant manuellement une force d'appui (F) sur la face inférieure dudit manchon (75) pour extraire ladite tige (750) de ladite première encoche (7010) et la faire glisser le long de ladite seconde encoche (7011).

5. Chariot pliable selon la revendication 4, **caractérisé en ce que** lesdits moyens élastiques sont constitués par une lame de ressort (74) fixé par une extrémité à la paroi inférieure de ladite poutre longitudinale centrale (70) et dont l'extrémité libre est insérée entre cette paroi et ledit manchon (75).

6. Chariot pliable selon l'une quelconque des revendications précédentes, **caractérisé en ce que**, la paire de roues (41, 42) disposée à l'avant du chariot étant mobile autour d'un axe (Δ_{V}) orthogonal à une direction longitudinale desdits seconds montants latéraux (33, 35), lesdits supports de roues associés (45, 46) sont munis d'organes (51, 52), dits de placage, constitués d'ailes dépassant lesdits supports, de manière à ce que, lorsque ledit dossier (8) passe de ladite position de travail à ladite position de repos, entraînant en rotation lesdits seconds montants latéraux (33, 35) et lesdits supports de roues (45, 46), lesdits organes de placage (51, 52) positionnent correctement lesdits supports de roues (45, 46) pour autoriser le repliement, et maintiennent ensuite, lorsque ladite position de repos est atteinte, les roues (41, 42) et leurs supports (45, 46) dans une position repliée, plaquées contre la face inférieure de ladite plate-forme centrale (6).

7. Chariot pliable selon l'une quelconque des revendications précédentes, **caractérisé en ce que**, lesdits montants latéraux (80, 81) dudit dossier (8) ayant une longueur telle qu'ils dépassent vers l'avant du chariot (2) dans la dite position de repos, ledit montant avant (30) du cadre (3) comporte des encoches (300, 301) sur sa face supérieure destinées à recevoir ces montants latéraux (80, 81), de manière à autoriser l'encastrement du dossier (8) dans ladite structure de plateau (3-6)

8. Chariot pliable selon la revendication 7, **caractérisé en ce que**, au moins l'un desdits montants latéraux (80) dudit dossier (8) comportant un orifice (800), il comprend en outre un système à cliquet (76) comprenant un téton arrondi (760), actionné par un ressort (761), s'engageant dans ledit orifice (800), pour verrouiller ledit montant (80) encastré dans ladite structure de plateau (3-6) lorsque ledit dossier (8) est dans ladite position de repos, et **en ce que** le déverrouillage est obtenu en exerçant une force de retrait sur ledit dossier(8), vers l'arrière du chariot (2), de manière à faire ressortir ledit téton (760) dudit orifice (800) et à libérer ledit montant latéral (80).

9. Chariot pliable selon l'une quelconque des revendications précédentes, **caractérisé en ce qu'**il est prévu un accessoire (9) de transport d'objets accrochable (90) de façon réversible au dit dossier (8) et/ou à ladite structure de plateau (3-6).

## Patentansprüche

1. Zusammenklappbarer Wagen, umfassend eine Plattenkonstruktion für den Transport von Gegenständen und einen umklappbaren Stirnbügel, der an einem, so genannten vorderen Ende des Wagens angeordnet ist, der eine erste, Arbeitsstellung genannte Stellung, in der er in einer fast orthogonalen Richtung zu besagter Plattenkonstruktion entfaltet ist, und eine umgeklappte, Ruhestellung genannte Stellung, für die er gegen besagte Plattenkonstruktion heruntergedrückt ist, hat, wobei diese Konstruktion auf wenigstens zwei Paaren von Radgehäusen und den dazu gehörenden Rädern aufliegt, von denen ein erstes Paar in einem Bereich nahe besagten vorderen Endes angeordnet ist, **dadurch gekennzeichnet, dass** besagte Plattenkonstruktion einen Rahmen (3), der aus einem Paar erster seitlicher Träger (32, 34) und aus zwei Trägern, die vorderer (30) und hinterer (31) genannt werden, besteht, und eine zentrale Plattform (6) von etwa rechteckiger Form umfasst, die einen freien Raum zwischen ihren seitlichen Flanken und besagten seitlichen Trägern (32, 34) lässt, dadurch, dass besagter Stirnbügel (8) zwei seitliche Träger (80, 81) umfasst, deren untere Endbereiche zwischen besagten ersten seitlichen Trägern (32, 34) und besagter zentraler Plattform (6) in besagtem freien Raum angeordnet sind und mechanisch an diese ersten seitlichen Träger (32, 34) und/oder an besagte zentrale Plattform (6) über Rotationsachsen (340) gekoppelt sind, dadurch, dass besagte Radgehäuse (45-48) mechanisch an ein Paar zweiter seitlicher Träger (33-35) gekoppelt sind, die unter besagten ersten seitlichen Trägern (32, 34) angeordnet und um Achsen (351, 353) rotierend beweglich sind, die an besagten vorderen Träger (30) beziehungsweise besagten hinteren Träger (31) des Rahmens (3) gekoppelt sind, dadurch, dass die unteren Enden besagter seitlicher Träger (80, 81) des Stirnbügels (8) Mittel zum Betätigen (810) haben, die dazu bestimmt sind, Hebelmittel (350) zu bewegen, die an den so genannten vorderen Enden besagter zweiter seitlicher Träger (33, 35) angeordnet sind, um ihre Rotation um besagte Rotationsachsen (351, 353) zu bewirken, wenn besagter Stirnbügel (8) zum vorderen Teil des Wagens (2) hin gedrückt wird, um aus besagter Arbeitsstellung in besagte Ruhestellung überzugehen, und um gleichzeitig das Umklappen besagter Räder (41-44) gegen die Unterseite genannte Seite besagter zentraler Plattform (6) zu bewirken, und dadurch, dass, wobei besagte erste Radgehäuse (45-48) wenigstens eine ebene Wand, die zum Inneren des Wagens (2) hin gewandt ist, umfassen und besagte zweite seitliche Träger (33-35) einen quadratischen oder rechteckigen Querschnitt haben, die unteren Endbereiche besagter seitlicher Träger (80, 81) besagten Stirnbügels (8) nach unten verlängert sind, um gegen besagte ebene Wände der ersten Radgehäuse (45-48) und gegen die Wände besagter seitlicher Träger (33-35), die zum Innern des Wagens hin gewandt sind, zu drücken, wenn besagter Stirnbügel (8) aus besagter Ruhestellung in besagte Arbeitsstellung übergeht, und um besagte zweite seitliche Träger (33, 35) um ihre so genannten Rotationsachsen (351, 353) zu schwenken, um besagte Radgehäuse (45-48) und die Räder (41-44), die zu ihnen gehören, zu entfalten und sie fest in einer ausgeklappten Stellung zu halten.

2. Zusammenklappbarer Wagen gemäß Anspruch 1, **dadurch gekennzeichnet, dass** besagte Mittel zum Betätigen aus Zapfen (851) bestehen, die die unteren Enden besagter seitlicher Träger (80, 81) des Stirnbügels (8) verlängern, und die einen Hebel bildenden Mittel aus einer Zunge (350) bestehen, die am so genannten hinteren Ende besagter zweiter seitlicher Träger (33, 35) befestigt ist, zum Innern des Wagens (2) hin herausragt und eine Kerbe (3500) mit zu besagtem Zapfen (851) paariger Form hat, und in die dieser hineingreift.

3. Zusammenklappbarer Wagen gemäß einem der Ansprüche 1 oder 2, **dadurch gekennzeichnet, dass** besagte zweite seitliche Träger (33, 35) ein System mit innerer Kurvenscheibe (37) umfassen, die jeweils durch einen unteren Endbereich eines der besagten seitlichen Träger (80, 81) besagten Stirnbügels (8) bewegt wird, dadurch, dass besagte Kurvenscheiben (37) um Achsen (370) rotierend beweglich sind, dadurch, dass besagte zweite seitliche Träger (33, 35) Schlitze (354) haben, dadurch, dass besagte Kurvenscheiben (37) eine abgerundete Wand (372) umfassen, die teilweise durch besagten Schlitz (354) austritt, wenn besagte seitliche Träger (80, 81) besagten Stirnbügels (8) in besagter Ruhestellung sind, und nach innen weggedrückt ist, wenn besagte seitliche Träger (80, 81) besagten Stirnbügels (8) in besagter Arbeitsstellung sind, dadurch, dass für jeden der besagten zweiten seitlichen Träger (33, 35) ein Längsgestänge (36) vorgesehen ist, von dem ein erstes Ende über eine Rotationsachse (371) an eine der besagten Kurvenscheiben (37) gekoppelt ist, das sich bis zu besagtem vorderem Ende besagter zweiter seitlicher Träger (33, 35) erstreckt, wobei die zweiten Enden dieser Gestänge (36) in besagter Ruhestellung mit der Oberfläche der Stirnflächen des vorderen Endes (354) dieser zweiten seitlichen Träger (33, 35) bündig sind und in besagter Arbeitsstellung diese Stirnflächen des vorderen Endes (354) überragen, um in Löchern (303), die in besagten vorderen Träger (30) gemacht sind, zu versinken, wobei diese Gestängeenden (36') mit den vorderen Rotationsachsen (353) besagter zweiter seitlicher Träger (33, 35) zusammenwirken, um sie zu verriegeln und ihre Rotation in besagter Arbeitsstellung zu verhindern.

4. Zusammenklappbarer Wagen gemäß einem der vorhergehenden Ansprüche, **dadurch gekennzeichnet, dass** die unteren Enden besagter seitlicher Träger (80, 81) besagten Stirnbügels (8) mechanisch über einen Querholm (73), der unter besagter Plattenkonstruktion (6) angeordnet ist, gekoppelt sind, dadurch, dass ein zentraler Längsträgerbalken (70) vorgesehen ist, der an seinen beiden Enden an besagtem vorderem Träger (30) beziehungsweise besagtem hinterem Träger (31) befestigt ist, dadurch, dass die Enden besagten Querholms (73) auch an die ersten Enden von zwei seitlichen Holmen (71, 72) gekoppelt sind, dadurch, dass die zweiten Enden dieser seitlichen Holme (71, 72) durch eine Manschette (75) vereinigt sind, die entlang besagten zentralen Längsträgerbalkens (70) gleitet, um eine dreieckige Konstruktion zu bilden, dadurch, dass besagter zentraler Längsträgerbalken (70) eine Öffnung (701) in Form eines umgedrehten "L" hat, dessen kurzer Arm eine erste Vertiefung (7010) und dessen langer Arm eine zweite Vertiefung (7011), die parallel zu einer Längsrichtung ist, bildet, dadurch, dass besagte Manschette (75) einen Stift (750) hat, der in besagte Öffnung (701) eingefügt ist, dadurch, dass elastische Mittel (74) vorgesehen sind, die eine abstoßende Kraft (F) ausüben, die darauf gerichtet ist, besagte Manschette (75) von der unteren Wand besagten zentralen Längsträgerbalkens (70) wegzuschieben, dadurch, dass, wenn besagte seitliche Träger (80, 81) besagten Stirnbügels (8) aus besagter Ruhestellung in besagte Arbeitsstellung übergehen, besagter Querholm (73) so mitgeführt 'wird, dass er selbst wiederum besagte Manschette (75) mittels besagter seitlicher Holme (71, 72) mitführt in eine Stellung, für die, da besagter Stift (750) besagter erster Vertiefung (7010) gegenübersteht und die Manschette (75) durch besagte elastische Mittel (74) zurückgedrückt wird, besagter Stift (750) in die erste Vertiefung (7010) einschnappt, die Manschette (75) in dieser Stellung blockiert bleibt und besagter Stirnbügel (8) in besagter Arbeitsstellung verriegelt ist, und dadurch, dass die Entriegelung erzielt wird, indem man manuell eine Druckkraft (F) auf die Unterseite besagter Manschette (75) ausübt, um besagten Stift (750) aus besagter erster Vertiefung (7010) zu ziehen und ihn entlang besagter zweiter Vertiefung (7011) gleiten zu lassen.

5. Zusammenklappbarer Wagen gemäß Anspruch 4, **dadurch gekennzeichnet, dass** besagte elastische Mittel aus einem Federblatt (74) bestehen, das an einem Ende an der unteren Wand besagten zentralen Längsträgerbalkens (70) befestigt ist und dessen freies Ende zwischen dieser Wand und besagter Manschette (75) eingefügt ist.

6. Zusammenklappbarer Wagen gemäß einem der vorhergehenden Ansprüche, **dadurch gekennzeichnet, dass**, da das Räderpaar (41, 42), das vorne am Wagen angeordnet ist, um eine Achse (Δ_{V}), die zu einer Längsrichtung besagter zweiter seitlicher Träger (33, 35) orthogonal ist, beweglich ist, besagte dazu gehörenden Radgehäuse (45, 46) mit Organen (51, 52), die Anschlagsorgane genannt werden, versehen sind, die aus Flügeln bestehen, die besagte Gehäuse überragen, damit, wenn besagter Stirnbügel (8) aus besagter Arbeitsstellung in besagte Ruhestellung übergeht, wobei er besagte zweite seitliche Träger (33, 35) und besagte Radgehäuse (45, 46) drehend mitführt, besagte Anschlagsorgane (51, 52) die besagten Radgehäuse (45, 46) in die richtige Stellung bringen, um das Zusammenklappen zu ermöglichen, und dann, wenn besagte Ruhestellung erreicht ist, die Räder (41, 42) und ihre Gehäuse (45, 46) in einer eingeklappten Stellung, gegen die Unterseite besagter zentraler Plattform (6) gedrückt, halten.

7. Zusammenklappbarer Wagen gemäß einem der vorhergehenden Ansprüche, **dadurch gekennzeichnet, dass**, da besagte seitliche Träger (80, 81) besagten Stirnbügels (8) eine solchen Länge haben, dass sie in besagter Ruhestellung vorne über den Wagen (2) herausragen, besagter vorderer Träger (30) des Rahmens (3) an seiner Oberseite Vertiefungen (300, 301) hat, die dazu bestimmt sind, diese seitlichen Träger (80, 81) aufzunehmen, um das Versenken des Stirnbügels (8) in besagte Plattenkonstruktion (3-6) zu ermöglichen.

8. Zusammenklappbarer Wagen gemäß Anspruch 7, **dadurch gekennzeichnet, dass**, wobei wenigstens einer der besagten seitlichen Träger (80) besagten Stirnbügels (8) eine Öffnung (800) hat, er außerdem ein Sperrklinkensystem (76) umfasst, das einen abgerundeten Stift (760) umfasst, der von einer Feder (761) bewegt wird, der in besagte Öffnung (800) einfährt, um besagten Träger (80), der in besagte Plattenkonstruktion (3-6) versenkt ist, zu verriegeln, wenn besagter Stirnbügel (8) in besagter Ruhestellung ist, und dadurch, dass das Entriegeln erzielt wird, indem man eine Zugkraft auf besagten Stirnbügel (8) zum hinteren Teil des Wagens (2) hin ausübt, um besagten Stift (760) aus besagter Öffnung (800) heraustreten zu lassen und besagten seitlichen Träger (80) freizugeben.

9. Zusammenklappbarer Wagen gemäß einem der vorhergehenden Ansprüche, **dadurch gekennzeichnet, dass** ein Zubehör (9) zum Transport von Gegenständen vorgesehen ist, das reversibel an besagtem Stirnbügel (8) und/oder an besagter Plattenkonstruktion (3-6) eingehängt werden kann (90).

## Claims

1. Collapsible trolley comprising a supporting structure for the transportation of objects and a folding back disposed at one end, referred to as the front end, of the trolley, including a first position, referred to as the working position, in which it is unfolded in a direction substantially perpendicular to the said supporting structure, and a folded position, referred to as the inoperative position, in which it is folded down towards the said supporting structure, this structure resting on at least two pairs of wheel supports and associated wheels, a first pair of which is disposed in a zone close to the said front end, **characterised in that** the said supporting structure comprises a frame (3) formed by a pair of first lateral members (32, 34) and two members referred to as front (30) and rear (31) members, and a central platform (6) of substantially rectangular shape leaving a free space between its lateral flanks and the said lateral members (32, 34), **in that** the said back (8) comprises two lateral members (80, 81), the lower end zones of which are disposed between the said first lateral members (32, 34) and the said central platform (6) in the said free space and are coupled mechanically to these first lateral members (32, 34) and/or to the said central platform (6) by means of axes of rotation (340), **in that** the said wheel supports (45-48) are coupled mechanically to a pair of second lateral members (33-35) disposed under the said first lateral members (32, 34) and movable in rotation about axes (351, 353) coupled to the said front (30) and rear (31) members of the frame (3) respectively, **in that** the lower ends of the said lateral members (80, 81) of the back (8) include control means (810) intended to activate lever means (350) disposed on the ends referred to as the front ends of the said second lateral members (33, 35), so that they are rotated about the said axes of rotation (351, 353) when the said back (8) is pushed towards the front of the trolley (2) in order to move from the said working position to the said inoperative position and the said wheels (41-44) are simultaneously folded up against the face referred to as the lower face of the said central platform (6), and **in that**, as the said first wheel supports (45-48) comprise at least one flat wall directed towards the interior of the trolley (2) and the said second lateral members (33-35) have a square or rectangular section, the lower end zones of the said lateral members (80, 81) of the said back (8) are extended towards the bottom so that they press against the said flat walls of the first wheel supports (45-48) and against the walls of the said lateral members (33-35) directed towards the interior of the trolley when the said back (8) moves from the said inoperative position to the said working position and the said second lateral members (33, 35) are pivoted about their said axes of rotation (351, 353) in order to unfold the said wheel supports (45-48) and the wheels (41-44) associated therewith and keep them firmly in an unfolded position.

2. Collapsible trolley according to claim 1, **characterised in that** the said control means are formed by pins (851) extending the lower ends of the said lateral members (80, 81) of the back (8) and the means forming the lever are formed by a tongue (350) fixed to the end referred to as the rear end of the said second lateral members (33, 35) projecting towards the interior of the trolley (2) and including a notch (3500) having a shape identical to that of the said pin (851) and in which the latter engages.

3. Collapsible trolley according to either of claims 1 or 2, **characterised in that** the said second lateral members (33, 35) comprise an internal cam system (37) activated in each case by a lower end zone of one of the said lateral members (80, 81) of the said back (8), **in that** the said cams (37) are movable in rotation about axes (370), **in that** the said second lateral members (33, 35) include slots (354), **in that** the said cams (37) comprise a rounded wall (372) emerging partially from the said slot (354) when the said lateral members (80, 81) of the said back (8) are in the said inoperative position and pushed back towards the interior when the said lateral members (80, 81) of the said back (8) are in the said working position, **in that** a longitudinal rod (36) is provided for each of the said second lateral members (33, 35), a first end of which is coupled by means of an axis of rotation (371) to one of the said cams (37), extending to the said front end of the said second lateral members (33, 35), the second ends of these rods (36) being flush with the surface of the front end faces (354) of these second lateral members (33, 35) in the said inoperative position and projecting beyond these front end faces (354) in the said working position so that they are pressed into holes (303) formed in the said front member (30), these rod ends (36') co-operating with the front axes of rotation (353) of the said second lateral members (33, 35) in order to lock them and to prevent them from rotating in the said working position.

4. Collapsible trolley according to any one of the preceding claims, **characterised in that** the lower ends of the said lateral members (80, 81) of the said back (8) are coupled mechanically by means of a transverse rail (73) disposed under the said supporting structure (6), **in that** a central longitudinal beam (70) is provided, fastened at its two ends to the said front (30) and rear (31) members respectively, **in that** the ends of the said transverse rail (73) are also coupled to first ends of two lateral rails (71, 72), **in that** the second ends of these lateral rails (71, 72) are joined together by means of a sleeve (75) sliding along the said central longitudinal beam (70) so as to form a triangular structure, **in that** the said central longitudinal beam (70) includes an opening (701) in the form of an inverted "L", the short arm of which forms a first notch (7010) and the long arm of which forms a second notch (7011) parallel to a longitudinal direction, **in that** the said sleeve (75) includes a rod (750) inserted into the said opening (701), **in that** elastic means (74) are provided, applying a repellent force (F) tending to move the said sleeve (75) away from the lower wall of the said central longitudinal beam (70), **in that**, when the said lateral members (80, 81) of the said back (8) move from the said inoperative position to the said working position, the said transverse rail (73) is driven in such a manner that it in turn drives the said sleeve (75) by means of the said lateral rails (71, 72) towards a position in which, as the said rod (750) is situated opposite the said first notch (7010) and the sleeve (75) has been pushed back by the said elastic means (74), the said rod (750) penetrates into the first notch (7010), the sleeve (75) remains blocked in this position and the said back (8) is locked in the said working position, and **in that** unlocking is obtained by manually applying pressure (F') to the lower face of the said sleeve (75) in order to remove the said rod (750) from the said first notch (7010) and make it slide along the said second notch (7011).

5. Collapsible trolley according to claim 4, **characterised in that** the said elastic means are formed by a spring leaf (74) fixed by means of one end to the lower wall of the said central longitudinal beam (70) and the free end of which is inserted between this wall and the said sleeve (75).

6. Collapsible trolley according to any one of the preceding claims, **characterised in that**, as the pair of wheels (41, 42) disposed at the front of the trolley is movable about an axis (Δ_{V}) perpendicular to a longitudinal direction of the said second lateral members (33, 35), the said associated wheel supports (45, 46) are provided with elements (51, 52), referred to as positioning elements, formed by flanges projecting beyond the said supports in such a manner that, when the said back (8) moves from the said working position to the said inoperative position, thereby driving the said second lateral members (33, 35) and the said wheel supports (45, 46) in rotation, the said positioning elements (51, 52) correctly position the said wheel supports (45, 46) in order to allow for the folding thereof and then, when the said inoperative position has been reached, hold the wheels (41, 42) and their supports (45, 46) in a folded position flat against the lower face of the said central platform (6).

7. Collapsible trolley according to any one of the preceding claims, **characterised in that**, as the said lateral members (80, 81) of the said back (8) have a length such that they project towards the front of the trolley (2) in the said inoperative position, the said front member (30) of the frame (3) includes notches (300, 301) on its upper face intended to receive these lateral members (80, 81) so as to allow the back (8) to be fitted into the said supporting structure (3-6).

8. Collapsible trolley according to claim 7, **characterised in that**, as at least one of the said lateral members (80) of the said back (8) includes an orifice (800), it moreover comprises a ratchet system (76) comprising a rounded pin (760) activated by a spring (761) engaging in the said orifice (800) in order to lock the said member (80) fitted into the said supporting structure (3-6) when the said back (8) is in the said inoperative position, and **in that** unlocking is obtained by applying pressure to the said back (8) in order to return it towards the rear of the trolley (2) so as to bring the said pin (760) out of the said orifice (800) and release the said lateral member (80).

9. Collapsible trolley according to any one of the preceding claims, **characterised by** an attachment (9) for the transportation of objects which can be hooked (90) in a reversible manner on to the said back (8) and/or on to the said supporting structure (3-6).
